# EUROPÄISCHE PATENTSCHRIFT

(11) **EP 2 239 544 B1**
(45) Veröffentlichungstag und Bekanntmachung des Hinweises auf die Patenterteilung: **01.03.2017**
(21) Anmeldenummer: 10006225.6
(22) Anmeldetag: 27.12.2006
(51) Int. Cl.: G01F 1/075, G01F 15/00, G01F 15/06, G01F 15/14

(54) **Messkapsel für Flüssigkeitszähler und Flüssigkeitszähler**
Measuring capsule for fluid counter and fluid counter
Capsule de mesure pour un compteur de liquide et compteur de liquide

(30) Priorität: 13.01.2006 DE 102006002519
(43) Veröffentlichungstag der Anmeldung: 13.10.2010
(62) Teilanmeldung aus: 06841175.0
(73) Patentinhaber: Minol Messtechnik W. Lehmann GmbH & Co. KG, 70771 Leinfelden-Echterdingen (DE)
(72) Erfinder: Lehmann, Werner, 70186 Stuttgart (DE)
(74) Vertreter: DREISS Patentanwälte PartG mbB

(56) Entgegenhaltungen:
- EP-A1- 1 326 061
- EP-B1- 0 842 398
- CH-A- 276 752
- DE-A1- 3 247 376
- DE-A1- 10 214 418
- DE-U1- 29 824 768

## Beschreibung

Die Erfindung betrifft eine Messkapsel für einen tangential angeströmten Flüssigkeitszähler, zum austauschbaren Einsatz in ein Unterputz- oder Aufputzgehäuse des Flüssigkeitszählers, wobei die Messkapsel einen eine Messkammer mit einem darin aufgenommenen Flügelrad begrenzenden Messbecher mit einem Einlass in die Messkammer und einem Auslass aus der Messkammer und einen Zählwerkteil aufweist.

Die Erfindung betrifft also keine sogenannten Koaxialzähler, wo die Messkammer mit Flügelrad oberhalb eines Einströmbereichs des Unterputz- oder Aufputzgehäuses liegt, sondern einen Flüssigkeitszähler, bei dem die Messkammer mit Flügelrad und der Einlass und der Auslass des Messbechers im wesentlichen in einer Ebene liegen. Das Flügelrad wird also im Wesentlichen in seiner Drehebene angeströmt.

Messkapseln für Flüssigkeitszähler (Flügelradzähler) der vorstehend genannten Art sind in großem Umfang und großer Vielfalt bekannt. Sie finden insbesondere als Gebrauchswasserzähler in der Gebäudebewirtschaftung Verwendung. Um das Flügelrad möglichst radial außen und möglichst tangential anzuströmen, ist bereits der Vorschlag gemacht worden, das Unterputz- oder Aufputzgehäuse mit einem Einlassstutzen und Auslassstutzen auszubilden, der asymmetrisch zu einer Längsmittelachse oder -ebene des Gehäuses, also in einem Abstand zu dieser, angeordnet ist. Dies ist aber aufgrund der fehlenden Symmetrie nachteilig.

Es sind auch Messkapseln mit nach außerhalb der Messkammer erstreckten verhältnismäßig langen Einlass- und Auslassstutzen am Messbecher bekannt geworden, die ihrerseits schräg und von der Längsmittelachse abgesetzt und asymmetrisch verlaufen. Diese benötigen aber einen großen Bauraum bei dem metallischen Unterputz- oder Aufputzgehäuse, damit die Messkapsel mit ihren langen Einlass- und Auslassstutzen in dem Gehäuse angeordnet werden kann, insbesondere wenn dieses in einer Längsmittelachse liegende Einlass- und Auslassstutzen aufweist. Dieser große Bauraum radial außerhalb der Messkammer oder des Messbechers bedingt somit, dass das Unterputz- oder Aufputzgehäuse des Flüssigkeitszählers sehr groß ausgebildet werden muss, was als nachteilig anzusehen ist.

DE 102 29 794 C1 offenbart einen gattungsfremden Flüssigkeitszähler, bei dem das Aufputzgehäuse und die Messkapsel einstückig aus Kunststoff gespritzt sind. Das Gehäuse weist einen in der Längsmittelachse liegenden Einlassstutzen und einen Auslassstutzen auf, von denen sich schräg zur Längsmittelachse ein Einlasskanal bzw. ein Auslasskanal erstreckt, um eine in etwa tangentiale Anströmung des Flügelrads zu erreichen. Aufgrund der Einstückigkeit ist ein Austausch einer Messkapsel nicht möglich und die Verwendung im Unterputzbereich verbietet sich daher. Außerdem baut das Gehäuse bei gegebenem Innendurchmesser der Messkammer nach radial außen sehr ausladend, was als nachteilig anzusehen ist. Dies ist jedoch zwingend erforderlich, um den Einströmkanal so ausbilden zu können, dass die Flüssigkeit im Wesentlichen tangential das Flügelrad beaufschlagt.

EP 0 842 398 B1 zeigt einen Einstrahl-Flüssigkeitszähler mit einem metallischen Gehäuse, in dem ein eine Messkammer mit einem darin aufgenommenen Flügelrad begrenzender Messbecher mit einer zylindrischen Wandung, mit einem Einlass in die Messkammer und mit einem Auslass aus der Messkammer vorgesehen ist, und mit einem darüber angeordneten Zählwerkteil, wobei der Einlass und der Auslass des Messbechers in einer Längsmittelachse des Messbechers und des metallischen Gehäuses des Flüssigkeitszählers liegen und der Messbecher bei einer Ausführungsform eine und bei einer anderen Ausführungsform zwei zu dieser Längsmittelachse geneigte große Einströmöffnungen aufweist, die eine zumindest teilweise Umlenkung der Flüssigkeit in eine tangentiale Richtung zum Flügelrad bewirken. Eine austauschbare gattungsgemäße Messkapsel ist nicht vorgesehen. Dieser Einstrahl-Flüssigkeitszähler benötigt jedoch eine sehr dicke Wandung des den Messbecher bildenden Teils, was in der Folge den Durchmesser des Flügelrads in nachteiliger Weise begrenzt.

Ausgehend vom vorstehend beschriebenen Stand der Technik liegt der vorliegenden Erfindung die Aufgabe zugrunde, eine Messkapsel für Flüssigkeitszähler der eingangs beschriebenen Art dahingehend zu verbessern, dass der an den Messbecher nach radial außen anschließende Bauraum möglichst gering gehalten wird, aber dennoch eine hydrodynamisch günstige Anströmung des Flügelrads in einem radial äußeren Bereich und ungefähr tangential erreicht werden kann. Außerdem soll auf ausladende Einlass- und Auslassstutzen am Messbecher verzichtet werden können. Es soll die Größe des Flüssigkeitszählers insgesamt möglichst gering gehalten werden.

Diese Aufgabe wird durch eine Messkapsel mit den Merkmalen des Anspruchs 1 gelöst.

Die Längsmittelachse ist dabei diejenige Achse, die durch den Mittelpunkt des Messbechers und/oder durch den Drehpunkt oder die Drehachse des Flügelrads verläuft und in dessen Drehebene liegt. Es wurde erfindungsgemäß festgestellt, dass auf eine Ausbildung des Messbechers mit in radialer Richtung ausladenden Einlass- und Auslassstutzen zur Erreichung einer im Wesentlichen tangentialen Anströmung des Flügelrads verzichtet werden kann, wenn in einer Wandung des Messbechers zur Bildung des Einlasses und des Auslasses mehrere zur Längsmittelachse geneigte Einströmöffnungen vorgesehen werden.

Derartige Messkapseln mit den weiter beanspruchten Abmessungen waren seither nicht denkbar, da der Außendurchmesser des Messbechers bei bekannten Messkapseln und Flügelradzählern der gattungsgemäßen Art sehr viel größer gewählt werden musste.

In Weiterbildung der Erfindung ist das Verhältnis des Außendurchmessers D des Messbechers zum Außendurchmesser D_{F1} ≤ 1,35.

Diese geneigten Einströmöffnungen haben vorzugsweise eine runde oder ovale Querschnittsfläche (senkrecht zu ihrer Längserstreckung betrachtet), was die Strömungsführung und Strömungsumlenkung positiv beeinflusst und zur Erreichung einer hohen Zählgenauigkeit beiträgt. Auch ist die Wandungsfläche und damit der Strömungswiderstand am geringsten. Es zeigte sich weiter überraschenderweise, dass die erwähnten mehreren geneigten Einströmöffnungen auch verhältnismäßig kurz sein können und dennoch eine Umlenkung der Flüssigkeit oder des Wassers bewirken, so dass das Flügelrad in einem radial äußeren Bereich der Flügel oder mithin im Wesentlichen tangential angeströmt wird. Auf diese Weise lassen sich Baugrößen des Flüssigkeitszählers erreichen, die sonst nur bei Zählern denkbar sind, bei denen keine austauschbare Messkapsel verwendet wird. Dennoch kann die erforderliche Zählgenauigkeit bei allen Strömungsgeschwindigkeiten erreicht werden.

Es erweist sich auch als vorteilhaft, wenn die geneigten Einströmöffnungen ihrerseits gerade sind, also entlang einer geraden Achse erstreckt sind.

Die Einströmöffnungen haben vorzugsweise eine größte Abmessung des Strömungsquerschnitts, insbesondere einen Durchmesser der Querschnittsfläche von 2 bis 5 mm, insbesondere von 3 bis 5 mm und weiter insbesondere von 3,5 bis 4,5 mm.

Es erweist sich weiter als vorteilhaft, wenn die Einströmöffnungen um die Längsmittelachse des Messbechers herum angeordnet sind. Um möglichst viele Einströmöffnungen pro Flächeneinheit vorzusehen, erweist es sich als vorteilhaft, wenn eine Einströmöffnung zentral, im wesentlichen auf der Längsmittelachse angeordnet ist und weitere Einströmöffnungen um diese Einströmöffnung herum angeordnet sind.

Die Anzahl der Einströmöffnungen des Einlasses oder des Einlassbereichs des erfindungsgemäßen Messbechers beträgt vorzugsweise 3 bis 10, insbesondere 3 bis 9, insbesondere 4 bis 8, insbesondere 5 bis 8 und weiter insbesondere 6 bis 8. Eine optimale Anzahl ist 7.

Es wurde erfindungsgemäß ermittelt, dass die Neigung der Einströmöffnungen zur Längsmittelachse vorzugsweise wenigstens 35°, insbesondere 35° - 55°, insbesondere 35° - 50°, insbesondere 37° - 45° beträgt.

Nach einem weiteren Erfindungsgedanken wird vorgeschlagen, die Einströmöffnungen derart auszubilden und zur Längsmittelachse des Messbechers derart anzuordnen, dass sie in Richtung dieser Längsmittelachse eine lichte Querschnittsfläche in das Innere des Messbechers bilden. Es hat sich nämlich überraschenderweise gezeigt, dass sich bei einer derartigen Ausbildung gerade bei geringen Strömungsgeschwindigkeiten eine hohe Zählgenauigkeit erreichen lässt. Bei hohen Strömungsgeschwindigkeiten wird die Flüssigkeit durch die geneigten Einströmöffnungen wohl nahezu vollständig in die tangentiale Richtung abgelenkt. Bei sehr niedrigen Strömungsgeschwindigkeiten wird angenommen, dass die Flüssigkeit zumindest teilweise auch der lichten Querschnittsfläche der Einströmöffnungen folgend strömt und damit das Flügelrad zumindest auch weiter radial innen anströmt. Überraschenderweise sind die Zählgenauigkeiten für geringe Strömungsgeschwindigkeiten bei Vorsehung einer lichten Querschnittsfläche in Richtung der Längsmittelachse des Messbechers höher.

Im Hinblick auf eine möglichst geringe radiale Erstreckung des Messbechers ausgehend vom Innendurchmesser der Messkammer erweist es sich als besonders vorteilhaft, dass die Einströmöffnungen nur einen verhältnismäßig kurzen Einströmkanal benötigen, dessen Länge 5 bis 10 mm beträgt, wobei jeweils die in der Mitte einer Einströmöffnung ermittelte Länge zwischen Innenumfang und Außenumfang der Wandung des Messbechers in diesem Bereich als Länge bezeichnet wird.

Es erweist sich insofern auch als besonders vorteilhaft, dass keine nach radial außen erstreckten Einlass- bzw. Auslassstutzen an dem Messbecher selbst vorgesehen werden müssen. Es erweist sich als vorteilhaft, wenn lediglich ein Abschnitt des Messbechers, in dem der Einlass ausgebildet ist, eine größere Wandstärke aufweist als in Umfangsrichtung angrenzende Bereiche des Messbechers. Diese Wandstärke des betrachteten Abschnitts des Einlasses ist 1,7 bis 2,5 mal so groß wie diejenige Wandstärke der angrenzenden Bereiche. Insofern ist die Außenabmessung des Messbechers nur geringfügig, insbesondere nur 1 bis 5 mm, vorzugsweise 1 bis 3 mm größer als der Außendurchmesser des übrigen zylindrischen bzw. topfförmigen Grundkörpers des Messbechers im Bereich minimaler Wandstärke.

Dadurch dass die Wandung des Messbechers zur Bildung der Einströmöffnungen verwendet wird, ist der hierfür benötigte Bauraum gering. Es wird außerhalb des Umfangs des Messbechers praktisch kein Bauraum benötigt. Die Abmessung des Messbechers und des Unterputz- oder Aufputzgehäuses ist daher viel geringer als bei bekannten Flüssigkeitszählern mit austauschbarer Messkapsel.

In Weiterbildung der Erfindung erweist es sich als vorteilhaft, wenn derjenige Abschnitt des Messbechers, in dem der Einlass ausgebildet ist, eine äußere Umfangskontur aufweist, die komplementär zur Innenkontur des Unterputz- oder Aufputzgehäuses im Bereich von dessen Einlassöffnung ausgebildet ist und mit der der Messbecher dichtend an die Innenkontur des Unterputz- oder Aufputzgehäuses anlegbar ist. Hierdurch kann auch eine Verdrehsicherung des Messbechers im Unterputz- oder Aufputzgehäuse erreicht werden.

Des Weiteren erweist es sich als vorteilhaft, wenn der Messbecher ein Kunststoffspritzteil ist. Ein Boden des Messbechers kann auch als zusätzliches Bauteil ausgebildet sein.

Der vorzugsweise im Wesentlichen topfförmige Messbecher kann in vorteilhafter Weise an seinem dem Flügelrad zugewandten Boden eine domförmige Erhebung aufweisen, die ein Auflager nach Art eines Lagertischs für das freie Ende einer Achse des Flügelrads oder des Flügelrads selbst bildet.

Nach einem weiteren Erfindungsgedanken ist die Messkasel von einer gegebenenfalls teilweise durchsichtigen Abdeckung mit einer Innenhaube und einer Außenhaube überfangen und der Außendurchmesser des Zählwerkteils ist geringer als der Außendurchmesser des Messbechers, und zwischen der Innenhaube und der Außenhaube der Messkapsel ist ein radialer Bauraum vorgesehen. Dieser Erfindungsgedanken ist an sich auch selbständig schutzbegründend.

Hierdurch lässt sich eine Reihe von Vorteilen erreichen, und es lassen sich vorteilhafte Weiterbildungen realisieren. Zum einen eröffnet dieser radiale Bauraum die Möglichkeit, dass die Messkapsel mittels eines über den Zählwerkteil mit aufgebrachter Innenhaube stülpbaren, insbesondere ringförmigen Montageelements gegen das Unterputz- oder Aufputzgehäuse fixierbar ist und dass der Außendurchmesser des Montageelements geringer ist als der Innendurchmesser der Außenhaube, so dass die Außenhaube die am Unterputz- oder Aufputzgehäuse fixierte Messkapsel und das Montageelement abzudecken vermag.

Das Montageelement kann dabei in axialer Richtung (Richtung der Drehachse des Flügelrads) eingesetzt werden und auch durch einen axialen Zugriff geschlossen oder geöffnet werden. Es handelt sich hierbei in vorteilhafter Weise um ein ringförmiges Montageelement, das beispielsweise ein Außengewinde trägt, mit dem es in ein Innengewinde am oberen Rand des Unterputz- oder Aufputzgehäuses einschraubbar ist. Aber auch ein bajonettartig wirkendes Montageelement wäre denkbar.

Nach einem weiteren Erfindungsgedanken weist das Montageelement wiederum in axialer Richtung zugängliche Werkzeugansetzstellen auf, um mittels eines Montagewerkzeugs in Fixierstellung gebracht werden zu können.

Nach einem weiteren Erfindungsgedanken weist das Montageelement radial innen Ausnehmungen auf, die die Werkzeugansetzstellen bilden. Der Monteur kann dann mit einem Montagewerkzeug axial in den Bauraum außerhalb der Innenhaube eingreifen und das Montageelement festziehen oder lösen.

Bei einer weiteren bevorzugten Ausführungsform der erfindungsgemäßen Messkapsel ist die Innenhaube über schnappende, rastende Hintergriffselemente zur Bildung einer eichtechnisch abgeschlossenen Einheit (Messkapsel) gegenüber dem Messbecher für den bestimmungsgemäßen Gebrauch beim Endverbraucher unlösbar fixierbar.

Die Innenhaube ist dabei insbesondere zusammen mit dem Zählwerkteil gegenüber dem Messbecher verdrehbar, um beim Endverbraucher beispielsweise eine horizontale Anordnung der Anzeige realisieren zu können.

Nach einem weiteren Erfindungsgedanken erweist es sich als besonders vorteilhaft, dass die Außenhaube mittels einer Plombe gegen unbefugtes Entfernen gesichert ist. Auf diese Weise ist nämlich zugleich erreicht, dass die Messkapsel nicht auf unbefugte Weise aus dem Unterputz- oder Aufputzgehäuse gelöst werden kann, da sich ja das Montageelement hierfür innerhalb der Außenhaube befindet.

Nach einem weiteren Erfindungsgedanken ist die Außenhaube gegen die Innenhaube fixiert, und diese Fixierung ist vorzugsweise auch durch eine Plombe gegen unbefugtes Lösen gesichert. Die Verbindung von Außenhaube und Innenhaube ist vorzugsweise derart, dass die Außenhaube drehbar ist und bei Drehen der Außenhaube die Innenhaube in Drehmitnahme ist, so dass das Zählwerk entsprechend den Anforderungen beim Einbau positioniert werden kann.

Bei einer bevorzugten Ausführungsform umgibt also die Außenhaube das Montageelement so, dass es nicht zugänglich ist, solange die Außenhaube nicht entfernt wird. Hierdurch wird ein wirksamer Schutz gegen Missbrauch erreicht. Bei bekannten Messkapseln und Flügelradzählern der eingangs genannten Art wurde das ausladende Montageelement über die Abdeckung der Messkapsel übergestülpt; es war also von außen zugänglich und musste deshalb aufwendig mittels Plomben gegen einen Flansch des Unterputz- oder Aufputzgehäuses gesichert werden. Dieser Flansch machte das Unterputz- oder Aufputzgehäuse außerdem radial sehr ausladend. Gerade bei Unterputzgehäusen liegen diese Plomben dann auch tief in der Wand an schwer zugänglicher Stelle und können nur sehr aufwendig gelöst bzw. nach dem Austausch gegen eine neue Messkapsel nur sehr schwer und aufwendig wieder angebracht werden. Dieser Nachteil kann mit der vorliegenden Erfindung umgangen werden.

Nach einer weiteren Erfindungsvariante erweist es sich als vorteilhaft, wenn in dem radialen Bauraum eine elektronische Einrichtung zur Erfassung und zur Aussendung von Verbrauchsdaten vorgesehen ist.

Zusätzlich kann es sich als vorteilhaft erweisen, wenn das Zählwerk und die Innenhaube nach radial innen rückspringende Bereiche aufweisen, in welche Komponenten der elektronischen Einrichtung einragen oder darin aufgenommen sind.

Nach einem wiederum an sich selbständig schutzbegründenden Erfindungsgedanken erweist es sich als vorteilhaft, wenn die elektronische Einrichtung zur Erfassung und Aussendung von Verbrauchsdaten wasserdicht in die Außenhaube integriert ist. Diese elektronische Einrichtung, häufig auch als Funkmodul bezeichnet, wird dann zusammen mit der Außenhaube auf die Messkapsel aufgesetzt. Funkmodul einerseits und Zählwerkteil der Messkapsel bleiben somit vollständig voneinander getrennt. Die Gestalt der Außenhaube und derjenigen Bereiche der Außenhaube, welche elektronische Komponenten zur Erfassung und zur Aussendung von Verbrauchsdaten, vorzugsweise über Funk, umfassen, sind so ausgebildet, dass sie nicht mit Komponenten des Zählwerkteils kollidieren, aber dennoch so angeordnet sind, dass sie bestimmungsgemäß mit Komponenten des Zählwerkteils, beispielsweise mit einer rotierenden Scheibe mit Magnet, zusammenwirken können.

Die Erfindung betrifft ferner einen Flügelradzähler für Flüssigkeiten mit den Merkmalen des Anspruchs 15.

Das mit einer feststehenden Verrohrung, insbesondere in Gebäuden, verbindbare Unterputz- oder Aufputzgehäuse des Flügelradzählers besteht vorteilhafterweise aus Metall, insbesondere aus Messing. Es handelt sich dabei vorzugsweise um ein Pressmessingteil oder ein Kunststoffteil.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der erfindungsgemäßen Messkapsel und eines erfindungsgemäßen Flügelradzählers. Sämtliche Merkmale der beigefügten Patentansprüche, insbesondere die Merkmale der unabhängigen Ansprüche, werden kombiniert mit jedem Merkmal eines anderen Anspruchs als erfindungswesentlich angesehen.

In der Zeichnung zeigt:
- Figur 1: eine Längsschnittansicht durch einen erfindungsgemäßen Flügelradzähler in einem Gehäuse;
- Figuren 2a bis d: verschiedene Ansichten und Schnittansichten eines Messbechers einer erfindungsgemäßen Messkapsel des Flügelradzählers nach Figur 1;
- Figuren 3a bis e: Darstellungen der Verbindung einer Außenhaube mit einer Innenhaube der Abdeckung und Befestigungsmittel hierfür;
- Figur 4: eine Ansicht eines Montagelements des Flügelradzählers;
- Figur 5: eine Draufsicht auf den Flügelradzähler mit oben aufgeschnittener Abdeckung; und
- Figur 6: eine perspektivische Ansicht der Innenhaube des Flügelradzählers.

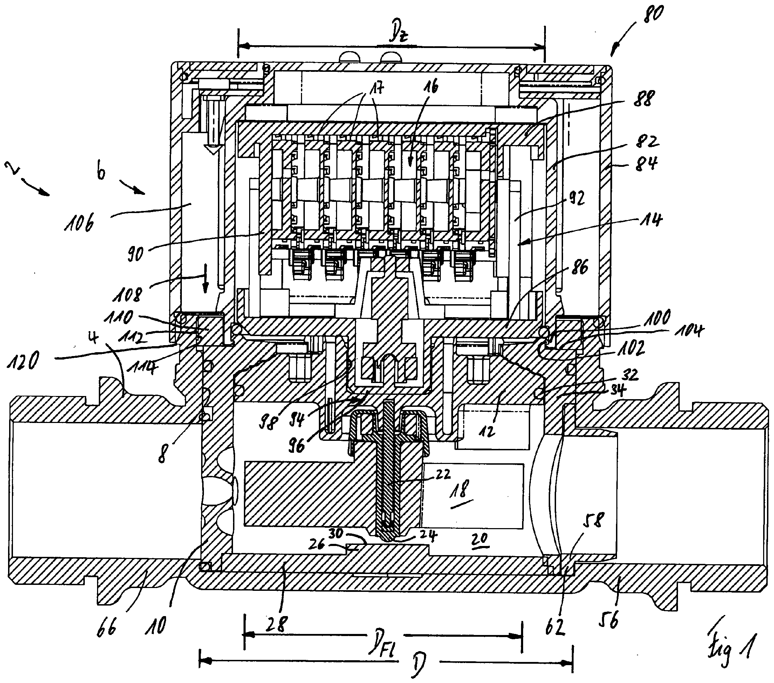

Figur 1 zeigt einen insgesamt mit dem Bezugszeichen 2 bezeichneten Flügelradzähler, der ein metallisches im dargestellten Fall für die Aufputzmontage geeignetes Gehäuse 4 sowie eine Messkapsel 6 umfasst, die in eine Montageöffnung 8 des Gehäuses 4 eingesetzt ist. Die Messkapsel 6 umfasst einen topfförmigen Messbecher 10, bei dem es sich um ein Kunststoffspritzteil handelt. Dieser Messbecher 10 bildet ein Gehäuseunterteil, welches über eine Druckplatte 12 mit einem Zählwerkteil 14 grundsätzlich lösbar, zum bestimmungsgemäßen Gebrauch jedoch unlösbar verbunden ist. In dem Zählwerkteil 14 ist oberhalb der Druckplatte 12 ein Zählwerk 16 mit Anzeigevorrichtungen 17 untergebracht. Es kann auch eine elektronische Sende-/Empfangseinrichtung zur drahtlosen Übermittlung von Messdaten vorgesehen sein. Der Zählwerkteil 14 bildet zusammen mit dem Messbecher 10 die austauschbare Messkapsel 6.

Ferner ersichtlich ist ein Flügelrad 18, welches in einer vom dem Messbecher 10 gebildeten Messkammer 20 drehbar angeordnet ist. Das Flügelrad 18 ist mit einem Ende seiner Achse 22 in der Druckplatte 12 gelagert. Das dieser Lagerstelle gegenüberliegende freie Ende 24 des Flügelrads 18 stützt sich punktförmig auf einer domförmigen Erhebung 26 eines Bodens 28 des Messbechers 10 ab, wobei die domförmige Erhebung 26 ein Auflager 30 für das freie Ende 24 des Flügelrads 18 bildet. Über eine Dichtung 32 zwischen Druckplatte 12 und der Wandung 34 des Messbechers 10 ist die Messkammer 20 flüssigkeitsdicht gegen das Äußere des Messbechers 10 und gegen den Zählwerkteil 14 abgedichtet.

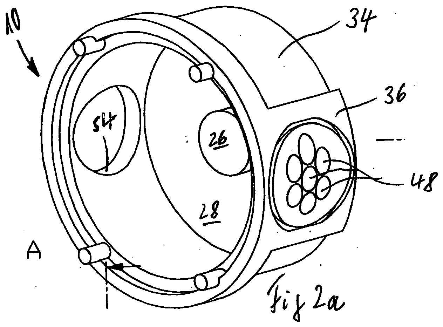

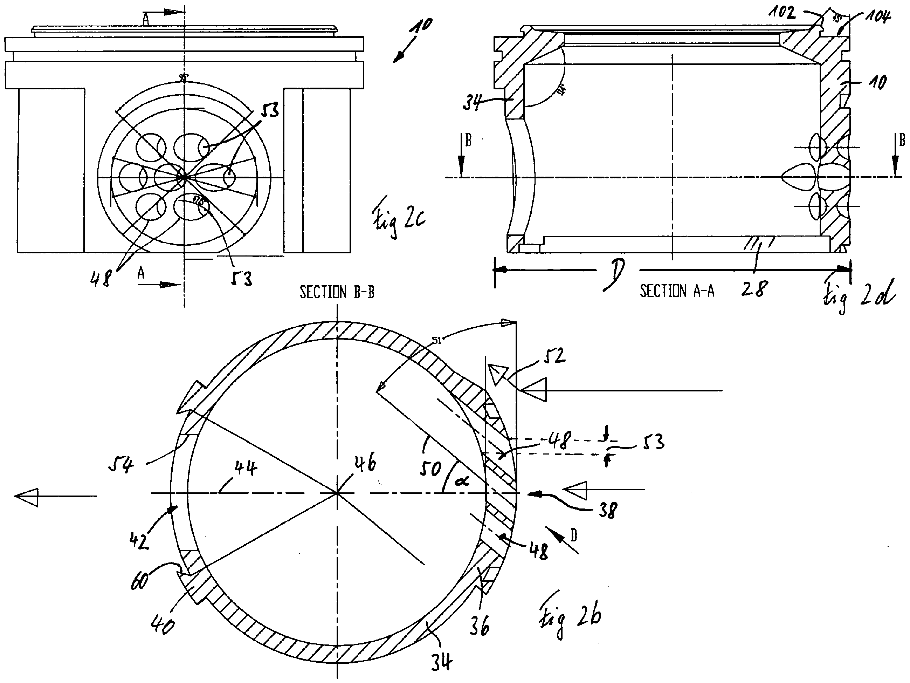

Zur näheren Beschreibung der Ausbildung des Messbechers 10 wird auf die Figuren 2a bis d Bezug genommen. Die jeweiligen Ansichten und Schnittebenen ergeben sich aus den ergänzenden Hinweisen in den Figuren. Figur 2a zeigt den Messbecher 10 in perspektivischer Darstellung. Man erkennt aus den Figuren 2a bis 2d, dass der Messbecher topfförmig ausgebildet ist und eine zylindrische Wandung 34 sowie den bereits erwähnten Boden 28 aufweist, der als separates scheibenförmiges Teil in den Messbecher einsetzbar ist. Ein Abschnitt 36 der Wandung 34 ist gegenüber angrenzenden Bereichen der Wandung 34 dicker ausgebildet. In diesem Abschnitt 36 ist ein Einlass 38 in den Messbecher 10 bzw. in die von dem Messbecher 10 begrenzte Messkammer 20 ausgebildet. Auf der diametral gegenüberliegenden Seite ist ebenfalls ein Abschnitt 40 der Wandung 34 mit vergrößerter Wandstärke ausgebildet, der einen Auslass 42 aus der Messkammer 20 bildet. Die Abschnitte 36 und 40 sowie der Einlass 38 und der Auslass 42 sind in einer Längsmittelachse 44 durch einen Mittelpunkt 46 des Messbechers 10 angeordnet. Der Messbecher 10 ist (abgesehen von noch näher zu beschreibenden Einströmöffnungen) bezüglich einer die Längsmittelachse 44 einschließenden Ebene senkrecht zur Zeichnungsebene der Figur 2b symmetrisch ausgebildet.

Der Einlass 38 weist mehrere Einströmöffnungen 48 durch den Abschnitt 36 der Wandung 34 auf. Diese mehreren Einströmöffnungen 48 (im dargestellten Fall sieben Einströmöffnungen, wobei sechs Einströmöffnungen um eine zentral angeordnete Einströmöffnung herum angeordnet sind) sind ihrerseits gerade, also entlang einer geraden Achse 50 erstreckt, die aber um einen Winkel α zur Längsmittelachse 44 geneigt ist, wobei die Neigung in der Drehebene des Flügelrads 18, also in der Zeichnungsebene der Figur 2b liegt. Auf diese Weise bilden die Einströmöffnungen 48 verhältnismäßig kurze, im dargestellten Fall nur bis etwa 10 mm lange Einströmkanäle, wobei jeweils die in der Mitte einer Einströmöffnung 48 in Richtung der geraden Achse 50 ermittelte Länge 52 zwischen Innenumfang und Außenumfang der Wandung 34 genommen wird (Figur 2b). Durch diese Neigung der mehreren Einströmöffnungen 48 zur Längsmittelachse 44 wird eine vorteilhafte Umlenkung des in Richtung der Längsmittelachse 44 durch den Einlass 38 in den Messbecher 10 einströmenden Wassers derart erreicht, dass die Flüssigkeit die Flügel des Flügelrads 18 in einem eher radial äußeren Bereich und in einer in etwa tangentialen Richtung beaufschlagt, was wünschenswert ist.

Querschnittsfläche, Länge und Neigung der Einströmöffnungen 48 sind dabei derart, dass in Richtung der Längsmittelachse 44 jeweils eine lichte Querschnittsfläche 53 in das Innere des Messbechers gebildet wird, was sich gerade im Hinblick auf geringe Strömungsgeschwindigkeiten als besonders vorteilhaft erwiesen hat. Bei geringer Strömungsgeschwindigkeit wird wohl ein Teil der Flüssigkeit der lichten Querschnittsfläche 53 folgend das Flügelrad weiter innen beaufschlagen; dennoch konnte hierdurch die Zählgenauigkeit erhöht werden.

Im dargestellten Fall sind die Einströmöffnungen 48 als Durchgangsöffnungen durch den Abschnitt 36 der Wandung 34 des Messbechers 10 ausgebildet; sie werden also von der Wandung 34 des Messbechers 10 selbst gebildet.

Im dargestellten Fall ist das Verhältnis eines Außendurchmessers D des Messbechers 10 (s. Figur 2d) zum Außendurchmesser D_{F1} des Flügelrads 18 1,34 (55 mm/41 mm = 1,34). Wenn beispielsweise ein Flügelrad mit 38 mm Außendurchmesser verwendet wird, so wäre das Verhältnis 1,44. Es wurde festgestellt, dass durch die erfindungsgemäße Ausbildung der vorstehend beschriebenen Komponenten eine optimale Ausnutzung des zur Verfügung stehenden Bauraums bzw. eine Minimierung des Bauraums des Unterputz- oder Aufputzgehäuses 4 des Flügelradzählers 2 erreicht werden kann.

In besonders vorteilhafter Weise ist dieser Außendurchmesser D des Messbechers 10 kleiner oder gleich 60 mm, insbesondere kleiner oder gleich 55 mm.

Der Auslass 42 des Messbechers 10 umfasst eine einzige große Ausströmöffnung 54. Auch hier könnte jedoch eine Anzahl von mehreren Ausströmöffnungen vorgesehen werden, was sich jedoch nicht als vorteilsbegründend erwiesen hat. Stattdessen erweist es sich als vorteilhaft, wenn in einen Auslassstutzen 56 des Gehäuses 4 (Figur 1) eine Bundbuchse 58 von innen her eingesetzt ist. Durch eine aus Figur 2b ersichtliche schwalbenschwanzförmige Freischneidung 60 kann der Messbecher 10 von oben in das Gehäuse 4 eingesetzt werden, wobei ein Bund 62 der Bundbuchse 58 in der schwalbenschwanzförmigen Freischneidung 60 aufgenommen wird. Hierbei wird eine wenigstens nahezu dichtende Anlage des Auslasses 42 des Messbechers 10 an die Innenseite des Gehäuses 4 ausgebildet. Es wird aber vor allem eine verdrehsichere Anordnung des Messbechers 10 im Gehäuse 4 erreicht. Im beispielhaft dargestellten Fall ist im Einlassstutzen 66 des Gehäuses 4 kein Einsatzteil vorgesehen.

Unter Bezugnahme auf die Figuren 1, 3 und 4 wird nun der Zählwerkteil 14 der Messkapsel 6 und die Montage der Messkapsel 6 in dem Gehäuse 4 des Flügelradzählers 2 erläutert. Der Zählwerkteil 14 ist von einer Abdeckung 80 überfangen, die zumindest teilweise durchsichtig ausgebildet ist und so eine Einsichtnahme auf das Zählwerk 16 und dessen Anzeige ermöglicht. Die Abdeckung 80 umfasst eine Innenhaube 82 und eine Außenhaube 84. Der Zählwerkteil 14 ist verhältnismäßig offen ausgebildet; er umfasst eine Basisplatte 86 und eine Deckplatte 88, die durch Wandabschnitte 90 und Stützstifte 92 gegeneinander abgestützt sind. Zwischen Basisplatte 86 und Deckplatte 88 ist eine Getriebeeinrichtung vorgesehen, die die Drehbewegung des Flügelrads 18 auf das Zählwerk 16 überträgt. Zur Aufnahme der Drehbewegung des Flügelrads wird eine magnetische Kopplungseinrichtung 94 verwendet, die in einem domförmigen von der Basisplatte 86 ausgehend nach unten vorstehenden Gehäusebereich 96 des Zählwerkteils 14 untergebracht ist, welcher Gehäusebereich 96 sich in eine komplementäre Ausnehmung 98 der Druckplatte 12 hineinerstreckt. Die Innenhaube 82 weist an ihrem dem Messbecher 10 zugewandten Rand schnappende oder rastende Hintergriffselemente 100 auf, die beim Aufstülpen der Innenhaube 82 auf den Zählwerkteil 14 mit komplementären Hintergriffselementen 102 (s. Figur 2d) im Bereich der oberen Stirnseite 104 des Messbechers 10 in eine formschlüssige Montagestellung rasten. Die Innenhaube 82 ist für den Endverbraucher nicht mehr zerstörungsfrei von dem Messbecher 10 lösbar; sie ist allenfalls gegenüber dem Messbecher 10 drehbar. Auf diese Weise bilden der Messbecher 10 und der Zählwerkteil 14 eine eichtechnisch abgeschlossene und während des bestimmungsgemäßen Gebrauchs nicht zugängliche Einheit.

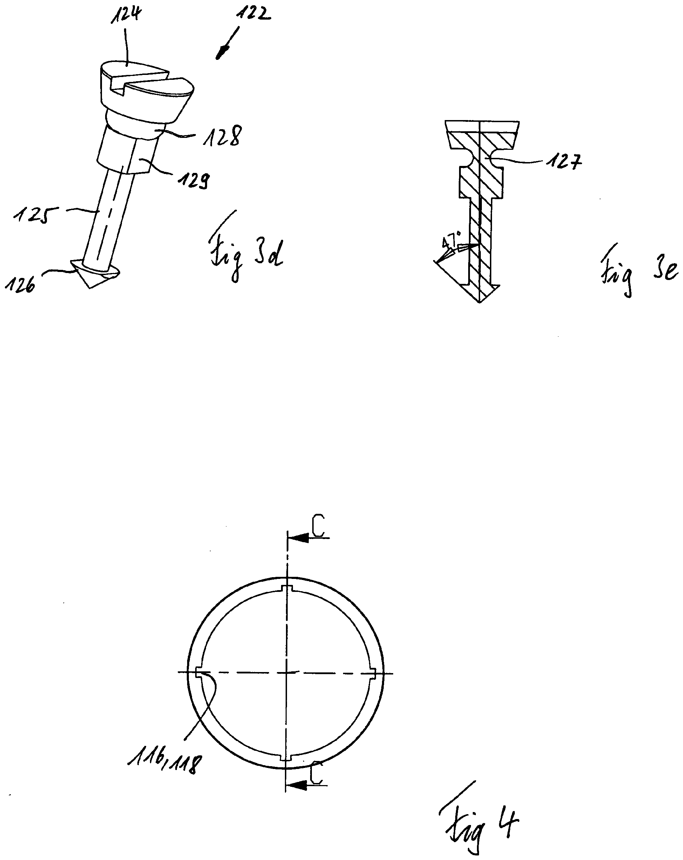

Insbesondere aufgrund der vorausgehend beschriebenen Ausbildung des Messbechers 10 und der Einströmöffnungen 48 war es möglich, den Messbecher 10 sehr klein bauend auszubilden, und zwar insbesondere auf Abmessungen, die sonst nur bei Flüssigkeitszählern ohne austauschbare Messkapsel realisiert werden konnten. Daraufhin wurden die Komponenten des Zählwerks 16 weiter so angeordnet, dass der Außendurchmesser der Innenhaube 82 einige Millimeter, insbesondere wenigstens 5, vorzugsweise wenigstens 8 mm kleiner ist als der Innendurchmesser der Außenhaube 84. Auf diese Weise wird ein radialer Bauraum 106 zwischen der Innenhaube 82 und der Außenhaube 84 geschaffen, der in vielfacher Weise nutzbar ist. Des Weiteren ist der Außendurchmesser der Innenhaube 82 kleiner als der Durchmesser der Stirnseite 104 des Messbechers 10, d. h. die Stirnseite des Messbechers 10 ist in axialer Richtung 108 zugänglich. Dies eröffnet in vorteilhafter Weise aber die Möglichkeit, dass ein insbesondere ringförmiges Montageelement 110 in axialer Richtung 108 auf oder über die Innenhaube 82 aufschiebbar ist. Mittels dieses Montageelements 110 wird die gesamte Messkapsel 6 in das Gehäuse 4 fest eingeschraubt. Hierzu weist das Montageelement 110 ein Außengewinde 112 und der obere Randabschnitt des Gehäuses 4 ein Innengewinde 114 auf. Als besonders vorteilhaft erweist es sich, dass das Montageelemente 110 axial zugänglich ist, und zwar durch den radialen Bauraum 106 hindurch bei abgenommener Außenhaube 84. Hierfür weist das Montageelement 110 vorzugsweise mehrere Werkzeugansetzstellen 116 auf, beispielsweise in Form von nach radial innen offenen Ausnehmungen 118 (ersichtlich aus Figur 4).

Nach Fixieren der Messkapsel 6 in dem Gehäuse 4 wird die Außenhaube 84 aufgesetzt. Sie übergreift im dargestellten Fall den zylindrischen Randabschnitt 120 des metallischen Gehäuses 4 außen und ist dort beispielsweise klemmschlüssig gehalten. Es wäre auch denkbar, dass die Außenhaube dort formschlüssig verrastet und schon auf diese Weise nicht zerstörungsfrei entfernt werden kann. Vorzugsweise ist die Außenhaube 84 gegen die Innenhaube 82 befestigbar. Hierfür kann beispielsweise eine Schraubverbindung oder eine Verrastung vorgesehen werden. Im dargestellten Fall ist eine Plombe 122 verwendet, die zugleich und selbst die Befestigung bewirkt. Stets sollte die Außenhaube 84 gegenüber dem Gehäuse 4, vorzugsweise unter Drehmitnahme der Innenhaube 82, drehbar sein.

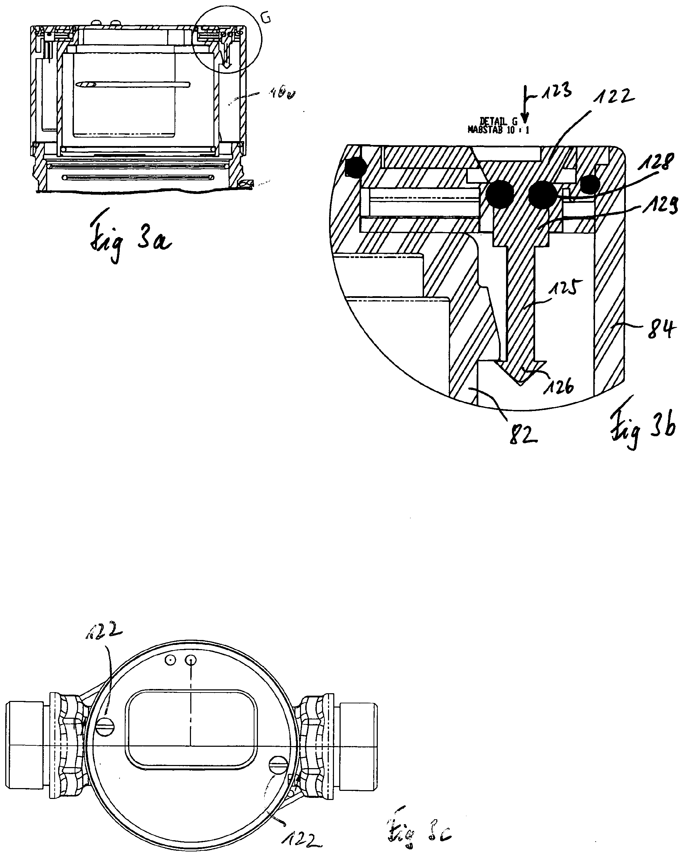

Die Ausbildung der Plombe 122 und die Befestigung der Außenhaube 84 an der Innenhaube 82 ist aus Figuren 3a bis 3e ersichtlich. Bei der Plombe 122 handelt es sich um ein in Richtung des Pfeils 123 steckbares Kunststoffteil mit einem Schraubenkopf 124 und einem Schaft 125 mit einem schnappbaren hintergreifenden freien Ende 126, mit dem die Plombe 122 in die in Figur 3b dargestellte Hintergriffsstellung mit der Innenhaube 82 bringbar ist. Zwischen Schraubenkopf 124 und Schaft 125 ist ein durchmesserverjüngter Bereich 127 vorgesehen, der eine Sollbruchstelle bildet. In diesem Bereich ist ein O-Ring 128 für Dichtungszwecke angeordnet. Zwischen dem durchmesserverjüngten Bereich 127 und dem Schaft 125 ist ein unrunder Abschnitt 129 ausgebildet, der eine Verdrehsicherung zu der Außenhaube 84 bildet. Ausgehend von der in Figur 3b dargestellten verrasteten Position der Plombe 122 ist die Außenhaube 84 nicht zerstörungsfrei von der Innenhaube 82 abhebbar. Hierfür muss erst der Schraubenkopf 124 der Plombe 122 mit einem Schraubenzieher abgedreht und dabei zerstört werden.

Auf diese Weise bildet die Außenhaube 84 selbst eine Plombe für die gesamte Messkapsel 6. Ohne Entfernen der Außenhaube 84 ist nämlich die Messkapsel 6 nicht aus ihrer bestimmungsgemäßen Montageposition in dem Gehäuse 4 lösbar, da ein Zugriff auf das Montageelement 110 dann nicht möglich ist.

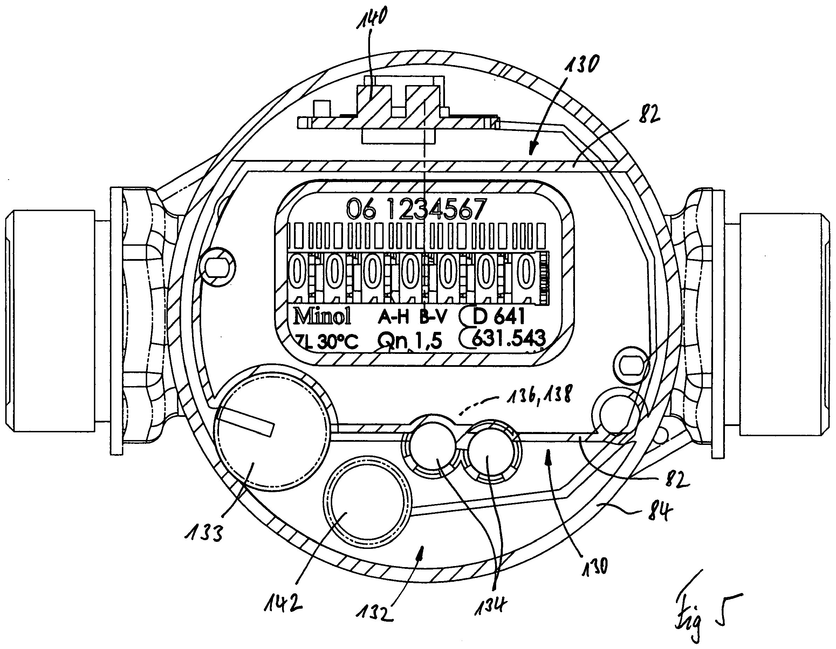

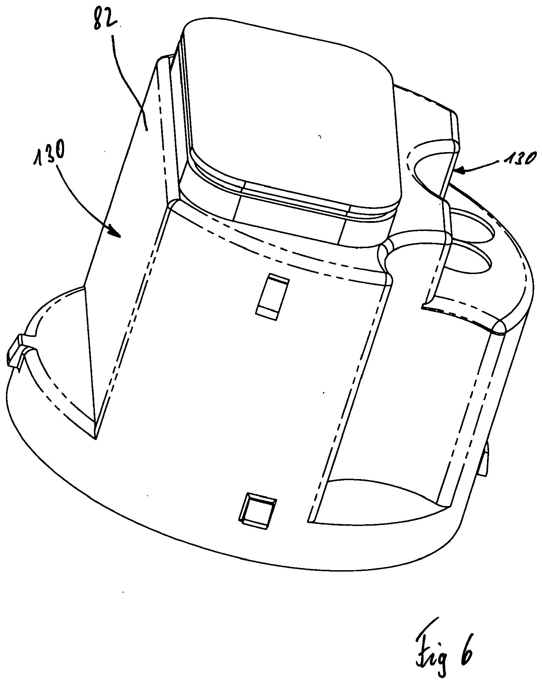

Man erkennt aus Figur 5 und 6, dass die Innenhaube 82 keine streng zylindrische Gestalt aufweist, sondern nach radial innen rückspringende Bereiche 130 aufweist, die den schon vorhandenen radialen Bauraum 106 zwischen Innenhaube 82 und Außenhaube 84 noch vergrößern. In diesen rückspringenden Bereichen 130 sind in die Außenhaube 84 integrierte elektrische und elektronische Komponenten, die eine Einrichtung 132 zur Erfassung und zur Aussendung von Verbrauchsdaten bilden, untergebracht, wenn die Außenhaube 84 in ihre bestimmungsgemäße Position an dem Gehäuse 4 des Flügelradzählers 2 gebracht ist. Die elektrischen und elektronischen Komponenten umfassen beispielsweise eine Batterie 133, Abgriffsspulen 134, die mit einer unter der Innenhaube 82 vorgesehenen rotierenden Scheibe 136 mit einem Magneten 138 des Zählwerks 16 zusammenwirken, sowie ein Rechenmittel/Prozessor 140 und eine Sendeeinrichtung/Antenne 142. Funkauslesbare elektronische Einrichtungen der hier in Frage kommenden Art und deren Komponenten sind aber grundsätzlich bekannt und brauchen daher nicht näher erläutert zu werden. Wesentlich ist jedoch ihre wasser- bzw. feuchtigkeitsdichte Integration in die Außenhaube 84.

## Patentansprüche

1. Messkapsel (6) für einen tangential angeströmten Flüssigkeitszähler (2), zum austauschbaren Einsatz in ein Unterputz- oder Aufputzgehäuse (4) des Flüssigkeitszählers (2), wobei die Messkapsel (6) einen eine Messkammer (20) mit einem darin aufgenommenen Flügelrad (18) begrenzenden Messbecher (10) mit einer zylindrischen Wandung (34), mit einem Einlass (38) in die Messkammer (20) und mit einem Auslass (42) aus der Messkammer (20), und einen Zählwerkteil (14) aufweist, **dadurch gekennzeichnet, dass** der Einlass (38) und der Auslass (42) des Messbechers (10) in einer Längsmittelachse (44) des Messbechers (10) und des Unterputz- oder Aufputzgehäuses (4) liegen und dass der Einlass (38) mehrere zu dieser Längsmittelachse (44) geneigte Einströmöffnungen (48) aufweist, die einen Einströmkanal von 5 - 10 mm Länge (52) bilden und die eine zumindest teilweise Umlenkung der Flüssigkeit in eine tangentiale Richtung zum Flügelrad bewirken, und dass ein Abschnitt (36) des Messbechers (10), in dem der Einlass (38) ausgebildet ist, eine größere Wandstärke aufweist als in Umfangsrichtung angrenzende zylindrische Bereiche der Wandung (34) des Messbechers, wobei die Wandstärke des Abschnitts (36) 1,7 - 2,5 mal so groß ist wie diejenige angrenzender zylindrischer Bereiche der Wandung (34) des Messbechers (10) und dass ein Außendurchmesser D des Messbechers (10) ≤ 55 mm ist und dass das Verhältnis des Außendurchmessers D des Messbechers (10) zum Außendurchmesser D_{F1} des Flügelrads (18) ≤ 1, 4 ist, und dass der Außendurchmesser D_{z} des Zählwerkteils (14) geringer ist als der Außendurchmesser D des Messbechers (10).

2. Messkapsel nach Anspruch 1, **dadurch gekennzeichnet, dass** die Einströmöffnungen (48) eine runde oder ovale Querschnittsfläche aufweisen.

3. Messkapsel nach Anspruch 1 oder 2, **dadurch gekennzeichnet, dass** die geneigten Einströmöffnungen (48) ihrerseits gerade sind.

4. Messkapsel nach Anspruch 1, 2 oder 3, **dadurch gekennzeichnet, dass** die Einströmöffnungen (48) eine größte Abmessung des Strömungsquerschnitts, insbesondere einen Durchmesser der Querschnittsfläche von 2 - 5 mm, insbesondere von 3 - 5 mm, insbesondere von 3,5 - 4,5 mm aufweisen.

5. Messkapsel nach einem oder mehreren der vorstehenden Ansprüche, **dadurch gekennzeichnet, dass** die Einströmöffnungen (48) um die Längsmittelachse (44) herum angeordnet sind und insbesondere eine Einströmöffnung (48) zentral auf der Längsmittelachse (44) angeordnet ist und weitere Einströmöffnungen (48) um diese Einströmöffnung herum angeordnet sind.

6. Messkapsel nach einem oder mehreren der vorstehenden Ansprüche, **dadurch gekennzeichnet, dass** die Neigung der Einströmöffnungen (48) zur Längsmittelachse (44) wenigstens 35°, insbesondere 35° - 55°, insbesondere 35° - 50°, insbesondere 37° - 45° beträgt.

7. Messkapsel nach einem oder mehreren der vorstehenden Ansprüche, **dadurch gekennzeichnet, dass** die Einströmöffnungen (48) derart ausgebildet und zur Längsmittelachse (44) des Messbechers (10) angeordnet sind, dass sie in Richtung dieser Längsmittelachse (44) eine lichte Querschnittsfläche (53) in das Innere des Messbechers (10) bilden.

8. Messkapseln nach einem oder mehreren der vorstehenden Ansprüche, **dadurch gekennzeichnet, dass** ein Abschnitt (36) des Messbechers (10), in dem der Einlass (38) ausgebildet ist, eine äußere Umfangskontur aufweist, die komplementär zur Innenkontur des Unterputz- oder Aufputzgehäuses (4) im Bereich von dessen Einlassöffnung ausgebildet ist und mit der der Messbecher dichtend an die Innenkontur anlegbar ist.

9. Messkapsel nach einem oder mehreren der vorstehenden Ansprüche, **dadurch gekennzeichnet, dass** der Messbecher (10) im Bereich von dessen Einlass (38) und/oder Auslass (42) formschlüssig mit einem in den Einlassstutzen (66) bzw. Auslassstutzen (56) eingesetzten Einsatzteil (58) zusammenwirkt.

10. Messkapsel nach einem oder mehreren der Ansprüche, **dadurch gekennzeichnet, dass** die Messkapsel (6) von einer gegebenenfalls teilweise durchsichtigen Abdeckung (80) überfangen ist und dass die Abdeckung (80) eine Innenhaube (82) und eine Außenhaube (84) umfasst und die Innenhaube (82) den Zählwerkteil (14) überfängt und zur Bildung einer eichtechnisch abgeschlossenen Einheit mit dem Messbecher (10) verbunden ist und dass zwischen der Innenhaube (82) und der Außenhaube (84) ein radialer Bauraum (106) vorgesehen ist, der bei abgenommener Außenhaube (84) zu Montagezwecken nutzbar ist oder zur Unterbringung weiterer Komponenten der Messkapsel dient.

11. Messkapsel nach Anspruch 10, **dadurch gekennzeichnet, dass** die Messkapsel (6) mittels eines über den Zählwerkteil (14) mit aufgebrachter Innenhaube (82) stülpbaren Montageelements (110) gegen das Unterputz- oder Aufputzgehäuse (4) fixierbar ist und dass der Außendurchmesser des Montageelements (110) geringer ist als der Innendurchmesser der Außenhaube (84), so dass die Außenhaube (84) die am Unterputz- oder Aufputzgehäuse (4) fixierte Messkapsel (10) abzudecken vermag.

12. Messkapsel nach Anspruch 11, **dadurch gekennzeichnet, dass** das Montageelement (110) ringförmig ist und ein Außengewinde (112) trägt, mit dem es in ein Innengewinde (114) am oberen Rand des Unterputz- oder Aufputzgehäuses (4) einschraubbar ist.

13. Flügelradzähler für Flüssigkeiten mit einem Unterputz- oder Aufputzgehäuse (4) mit einem Einlassstutzen (66) und einem Auslassstutzen (56), die in einer Längsmittelachse (44) des Unterputz- oder Aufputzgehäuses (4) liegen, und einer in das Unterputz- oder Aufputzgehäuse (4) einsetzbaren Messkapsel (6) nach einem oder mehreren der vorstehenden Ansprüche, wobei Einlass (38) und Auslass (42) der Messkapsel (6) fluchtend zum Einlassstutzen (66) und zum Auslassstutzen (56) des Unterputz- oder Aufputzgehäuses (4) zu liegen kommen.

## Claims

1. A measuring capsule (6) for a fluid counter (2), the latter experiencing a tangential oncoming flow, for interchangeable insertion into a subsurface-mounted or surface-mounted housing (4) of the fluid counter (2), wherein the measuring capsule (6) has a measuring cup (10), defining a measuring chamber (20) with an impeller wheel (18) received in it, the measuring cup having a cylindrical wall (34) with an inlet (38) into the measuring chamber (20) and with an outlet (42) from the measuring chamber (20), and the measuring capsule (6) has a meter part (14), **characterized in that** the inlet (38) and the outlet (42) of the measuring cup (10) are located in a longitudinal center axis (44) of the measuring cup (10) and of the subsurface-mounted or surface-mounted housing (4); and that the inlet (38) has a plurality of inflow openings (48), inclined toward this longitudinal center axis (44), which form an inflow channel with a length (52) of 5 - 10 mm and which effect an at least partial deflection of the fluid into a tangential direction to the impeller wheel; and that a portion (36) of the measuring cup (10), in which the inlet (38) is embodied, has a greater wall thickness than in circumferentially adjoining cylindrical regions of the wall (34) of the measuring cup, and the wall thickness of the portion (36) is from 1.7 - 2.5 times as large as the adjoining cylindrical regions of the wall (34) of the measuring cup (10); and that an outer diameter D of the measuring cup (10) is ≤ 55 mm; and that the ratio of the outer diameter D of the measuring cup (10) to the outer diameter D_{F1} of the impeller wheel (18) is ≤ 1.4; and that the outer diameter D_{Z} of the meter part (14) is less than the outer diameter D of the measuring cup (10).

2. The measuring capsule of claim 1, **characterized in that** the inflow openings (48) have a round or oval cross-sectional area.

3. The measuring capsule of claim 1 or 2, **characterized in that** the inclined inflow openings (48) are in turn rectilinear.

4. The measuring capsule of claim 1, 2 or 3, **characterized in that** the inflow openings (48) have a maximum dimension of the flow cross section, in particular a diameter of the cross-sectional area, of 2 - 5 mm, in particular 3 - 5 mm, in particular 3.5 - 4.5 mm.

5. The measuring capsule of one of the foregoing claims, **characterized in that** the inflow openings (48) are located around the longitudinal center axis (44), and in particular one inflow opening (48) is located centrally on the longitudinal center axis (44), and further inflow openings (48) are located around this inflow opening.

6. The measuring capsule of one of the foregoing claims, **characterized in that** the inclination of the inflow openings (48) to the longitudinal center axis (44) amounts to at least 35°, in particular 35° - 55°, in particular 35° - 50°, in particular 37° - 45°.

7. The measuring capsule of one of the foregoing claims, **characterized in that** the inflow openings (48) are embodied in such a way and located relative to the longitudinal center axis (44) of the measuring cup (10) in such a way that in the direction of this longitudinal center axis (44) they form an inside cross-sectional area (53) into the interior of the measuring cup (10).

8. The measuring capsule of one of the foregoing claims, **characterized in that** a portion (36) of the measuring cup (10), in which portion the inlet (38) is embodied, has an outer circumferential contour which is embodied as complementary to the inner contour of the subsurface-mounted or surface-mounted housing (4) in the vicinity of the inflow opening thereof and with which the measuring cup can be placed in sealing fashion against the inner contour.

9. The measuring capsule of one of the foregoing claims, **characterized in that** the measuring cup (10) cooperates form-fittingly, in the vicinity of its inlet (38) and/or outlet (42), with an insert part (58) inserted into the inlet connector (66) or outlet connector (56).

10. The measuring capsule of one of the foregoing claims, **characterized in that** the measuring capsule (6) is overlaid with an optionally partially transparent covering (80), and that the covering (80) includes an inner hood (82) and an outer hood (84), and the inner hood (82) overlies the meter part (14) and is joined to the measuring cup (10), for forming a unit that is closed in terms of calibration technology; and that between the inner hood (82) and the outer hood (84), a radial structural space (106) is provided, which when the outer hood (84) is removed can be used for assembly purposes or serves to accommodate further components of the measuring capsule.

11. The measuring capsule of claim 10, **characterized in that** the measuring capsule (6) is fixable against the subsurface-mounted or surface-mounted housing (4) by means of an assembly element (110) that can be pulled over the meter part (14) with the attached inner hood (82); and that the outer diameter of the assembly element (110) is less than the inner diameter of the outer hood (84), so that the outer hood (84) is capable of covering the measuring capsule (10) fixed to the subsurface-mounted or surface-mounted housing (4).

12. The measuring capsule of claim 11, **characterized in that** the assembly element (11) is annular and has a male thread (112), with which it can be screwed into a female thread (114) on the upper edge of the subsurface-mounted or surface-mounted housing (4).

13. An impeller wheel counter for fluids, having a subsurface-mounted or surface-mounted housing (4) with an inlet connector (66) and an outlet connector (56) which are located in a longitudinal center axis (44) of the subsurface-mounted or surface-mounted housing (4), and also having a measuring capsule (6) of one of the foregoing claims that is insertable into the subsurface-mounted or surface-mounted housing (4), wherein the inlet (38) and outlet (42) of the measuring capsule (6) come to rest in alignment with the inlet connector (66) and with the outlet connector (56) of the subsurface-mounted or surface-mounted housing (4).

## Revendications

1. Capsule de mesure (6) pour un compteur de liquides (2) rencontré tangentiellement par le courant, destinée à être insérée de manière échangeable dans un boîtier encastré ou en saillie (4) dudit compteur de liquides (2), dans laquelle la capsule de mesure (6) présente un godet de mesure (10) qui délimite une chambre de mesure (20) ayant une roue à ailettes (18) y logée et qui présente une paroi cylindrique (34), une entrée (38) dans ladite chambre de mesure (20) et une sortie (42) hors de la chambre de mesure (20), ainsi qu'une partie de compteur (14), **caractérisée par le fait que** l'entrée (38) et la sortie (42) du godet de mesure (10) sont situées dans un axe médian longitudinal (44) du godet de mesure (10) et du boîtier encastré ou en saillie (4) et que l'entrée (38) présente une pluralité d'ouvertures d'admission (48) inclinées par rapport à cet axe médian longitudinal (44) qui forment un canal d'admission d'une longueur comprise entre 5 et 10 mm (52) et qui provoquent que le liquide est dévié au moins en partie dans une direction tangentielle par rapport à la roue à ailettes, et qu'une portion (36) du godet de mesure (10) dans laquelle est réalisée ladite entrée (38) présente une épaisseur de paroi plus importante que des zones cylindriques de la paroi (34) du godet de mesure qui sont contiguës dans la direction circonférentielle, l'épaisseur de paroi de la portion (36) faisant entre 1,7 et 2,5 fois celle de zones cylindriques contiguës de la paroi (34) du godet de mesure (10), et qu'un diamètre extérieur D du godet de mesure (10) est ≤ 55 mm et que le rapport du diamètre extérieur D du godet de mesure (10) au diamètre extérieur D_{F1} de la roue à ailettes (18) est ≤ 1,4 et que le diamètre extérieur D_{Z} de ladite partie de compteur (14) est inférieur au diamètre extérieur D du godet de mesure (10).

2. Capsule de mesure selon la revendication 1, **caractérisée par le fait que** l'aire de la section des ouvertures d'admission (48) est ronde ou ovale.

3. Capsule de mesure selon la revendication 1 ou 2, **caractérisée par le fait que** les ouvertures d'admission (48) inclinées sont, quant à elles, droites.

4. Capsule de mesure selon la revendication 1, 2 ou 3, **caractérisée par le fait que** les ouvertures d'admission (48) présentent une dimension la plus grande de la section de passage, en particulier un diamètre de l'aire de la section compris(e) entre 2 et 5 mm, en particulier entre 3 et 5 mm, en particulier entre 3,5 et 4,5 mm.

5. Capsule de mesure selon l'une ou plusieurs des revendications précédentes, **caractérisée par le fait que** les ouvertures d'admission (48) sont disposées autour de l'axe médian longitudinal (44) et que, en particulier, une ouverture d'admission (48) est disposée de manière centrale sur l'axe médian longitudinal (44) et d'autres ouvertures d'admission (48) sont disposées autour de cette ouverture d'admission.

6. Capsule de mesure selon l'une ou plusieurs des revendications précédentes, **caractérisée par le fait que** l'inclinaison des ouvertures d'admission (48) par rapport à l'axe médian longitudinal (44) est de 35° au moins, en particulier comprise entre 35° et 55°, en particulier entre 35° et 50°, en particulier entre 37° et 45°.

7. Capsule de mesure selon l'une ou plusieurs des revendications précédentes, **caractérisée par le fait que** les ouvertures d'admission (48) sont réalisées et disposées par rapport à l'axe médian longitudinal (44) du godet de mesure (10) de telle sorte qu'elles forment, en direction de cet axe médian longitudinal (44), une aire de la section (53) libre vers l'intérieur du godet de mesure (10).

8. Capsule de mesure selon l'une ou plusieurs des revendications précédentes, **caractérisée par le fait qu'**une portion (36) du godet de mesure (10) dans laquelle est réalisée l'entrée (38) présente un contour circonférentiel extérieur qui est réalisé de façon complémentaire au contour intérieur du boîtier encastré ou en saillie (4) au niveau de son ouverture d'entrée et par lequel le godet de mesure peut être appliqué à étanchéité sur le contour intérieur.

9. Capsule de mesure selon l'une ou plusieurs des revendications précédentes, **caractérisée par le fait que** le godet de mesure (10) coopère à engagement positif, au niveau de son entrée (38) et/ou de sa sortie (42), avec une pièce d'insertion (58) insérée dans la tubulure d'entrée (66) ou bien la tubulure de sortie (56).

10. Capsule de mesure selon l'une ou plusieurs des revendications, **caractérisée par le fait que** la capsule de mesure (6) est recouverte d'une couverture (80) le cas échéant partiellement transparente et que ladite couverture (80) comprend un capot intérieur (82) et un capot extérieur (84) et que la capot intérieur (82) recouvre ladite partie de compteur (14) et est relié au godet de mesure (10) pour former une unité fermée en matière d'étalonnage, et qu'un espace radial de montage (106) est prévu entre le capot intérieur (82) et le capot extérieur (84), qui, lorsque le capot extérieur (84) est ôté, peut être utilisé à des fins de montage ou sert à loger d'autres composants de la capsule de mesure.

11. Capsule de mesure selon la revendication 10, **caractérisée par le fait que** la capsule de mesure (6) peut être fixée contre le boîtier encastré ou en saillie (4) par l'intermédiaire d'un élément de montage (110) apte à être planté sur la partie de compteur (14) à capot intérieur (82) placé, et que le diamètre extérieur de l'élément de montage (110) est inférieur au diamètre intérieur du capot extérieur (84) de sorte que le capot extérieur (84) est apte à couvrir la capsule de mesure (10) fixée sur le boîtier encastré ou en saillie (4).

12. Capsule de mesure selon la revendication 11, **caractérisée par le fait que** ledit élément de montage (110) est annulaire et présente un filet extérieur (112) par lequel il peut être vissé dans un filet intérieur (114) réalisé sur le bord supérieur du boîtier encastré ou en saillie (4).

13. Compteur à roue à ailettes pour liquides, comprenant un boîtier encastré ou en saillie (4) ayant une tubulure d'entrée (66) et une tubulure de sortie (56) qui sont situées dans un axe médian longitudinal (44) du boîtier encastré ou en saillie (4), ainsi qu'une capsule de mesure (6) selon l'une ou plusieurs des revendications précédentes, qui peut être insérée dans ledit boîtier encastré ou en saillie (4), dans lequel l'entrée (38) et la sortie (42) de la capsule de mesure (6) viennent se situer en alignement par rapport à la tubulure d'entrée (66) et à la tubulure de sortie (56) du boîtier encastré ou en saillie (4).
